# DEMANDE DE BREVET EUROPEEN

(11) **EP 0 811 316 A1**
(43) Date de publication de la demande: **10.12.1997**
(21) Numéro de dépôt: 97401282.5
(22) Date de dépôt: 06.06.1997
(51) Int. Cl.: A01G 9/02

(54) **Bac de culture de végétaux à destination décorative**

(30) Priorité: 07.06.1996 FR 9607053
(71) Demandeur: Avance Technologique Choletaise Atech, 49280 Mazières en Mauges (FR)
(72) Inventeur: Guesdon, André, 49300 Cholet (FR)
(74) Mandataire: Dawidowicz, Armand

(57) **Abrégé**

L'invention concerne un dispositif de culture de végétaux du type comprenant un bac (1) de culture à végétaux et une pièce d'assise (2).

Ce dispositif est caractérisé en ce que la pièce d'assise (2) comprend une platine (2A) comportant au moins un perçage traversant (14) pour le passage d'un organe de fixation de la pièce d'assise à un support et au moins un organe d'immobilisation du bac (1) de culture sur la pièce d'assise, et en ce que le bac (1) est pourvu, dans sa partie de fond (4), d'au moins une cheminée (5) afin de constituer un logement (8) pour l'organe d'immobilisation (7) de la pièce d'assise (2), la réunion du bac (1) à la pièce d'assise (2) se faisant par emboîtement du logement (8) du bac (1) sur l'organe d'immobilisation (7), cet organe d'immobilisation (7) étant disposé parallèle ou orthogonal à l'axe du perçage de la pièce d'assise.

Application à la décoration de lieux publics ou privés.

## Description

L'invention concerne un dispositif de culture de végétaux à destination décorative.

Elle concerne plus particulièrement un dispositif de culture de végétaux du type comprenant un bac de culture à végétaux et une pièce d'assise pour fixer ledit bac sur un support quelconque, généralement vertical ou horizontal, tel que mur, garde corps, surface d'appui.

Les pièces d'assise ou corps de soutien développés jusqu'à maintenant pour fixer les bacs sur un support quelconque présentent plusieurs problèmes devant être résolus. Des exemples de ces corps de soutien sont décrits dans le brevet US-A-2.025.707 et dans le brevet FR-A-1.367.888. Ces corps de soutien, constitués à partir d'armatures métalliques travaillées, présentent souvent une résistance insuffisante pour supporter de lourdes charges. En outre, ils sont de construction complexe et ne facilitent donc pas le montage du bac sur ledit corps de soutien car ils nécessitent en général de nombreux points d'accrochage entre bac et corps de soutien et entre corps de soutien et support. Enfin, ils n'assurent pas une immobilisation parfaite du bac sur sa pièce d'assise comme le montre le brevet autrichien AT-A-348814 dans lequel un déplacement à coulissement du bac sur sa pièce d'assise est possible.

Un premier but de l'invention est de proposer un bac de culture qui coopère avec une pièce d'assise de manière telle que le bac peut être monté aisément sur ladite pièce d'assise et peut se positionner automatiquement dans une position dans laquelle il est immobilisé sur ladite pièce d'assise sans organe de fixation supplémentaire.

Un autre but de la présente invention est de proposer un bac de culture aisément verrouillable à sa pièce d'assise pour le rendre inviolable, cette pièce d'assise étant totalement invisible en position assemblée desdits éléments renforçant ainsi l'inviolabilité de l'ensemble.

A cet effet, l'invention a pour objet un dispositif de culture de végétaux à destination décorative, du type comprenant un bac de culture à végétaux et une pièce d'assise pour fixer ledit bac sur un support quelconque, généralement vertical ou horizontal, tel que mur, garde corps, surface d'appui, caractérisé en ce que d'une part la pièce d'assise comprend au moins une platine de fixation comportant au moins un perçage traversant pour le passage d'un organe de fixation de la pièce d'assise au support et au moins un organe d'immobilisation et de positionnement du bac de culture sur la pièce d'assise, et en ce que d'autre part le bac est pourvu, dans sa partie de fond, d'au moins une cheminée ou organe tubulaire, ouvert à sa base, et s'étendant sensiblement orthogonalement de ladite partie de fond en direction de l'ouverture du bac afin de constituer un logement pour l'organe d'immobilisation et de positionnement complémentaire de la pièce d'assise, la réunion du bac à la pièce d'assis se faisant par simple emboîtement du logement du bac sur l'organe d'immobilisation de la pièce d'assise, ce ou ces organes d'immobilisation de la pièce d'assise étant disposés orthogonaux et/ou parallèles à l'axe du perçage de la pièce d'assise pour autoriser une pose en applique sur un support vertical ou en appui sur un support horizontal.

Selon une forme de réalisation préférée de l'invention, la ou les cheminées du bac de culture sont pourvues d'une ouverture ménagée sur une portion de la surface périphérique de la cheminée de manière à déboucher d'une part dans la face de fond du bac, d'autre part dans la face latérale de ce bac qui s'applique à la pièce d'assise lorsque les organes d'immobilisation de la pièce d'assise sont disposés orthogonalement à l'axe des perçages de la pièce d'assise, ledit débouché dans la face latérale interdisant par ses dimensions le passage de l'organe d'immobilisation logé dedans.

L'invention sera bien comprise à la lecture de la description suivante d'exemples de réalisation, en référence aux dessins annexés dans lesquels :
la figure 1 représente une vue en perspective éclatée d'un bac coopérant avec un corps de soutien pour fixer le bac sur un support vertical ;
la figure 2 représente un corps de soutien permettant de fixer le bac sur un support horizontal et
la figure 3 représente une vue arrière en perspective du bac de la figure 1.

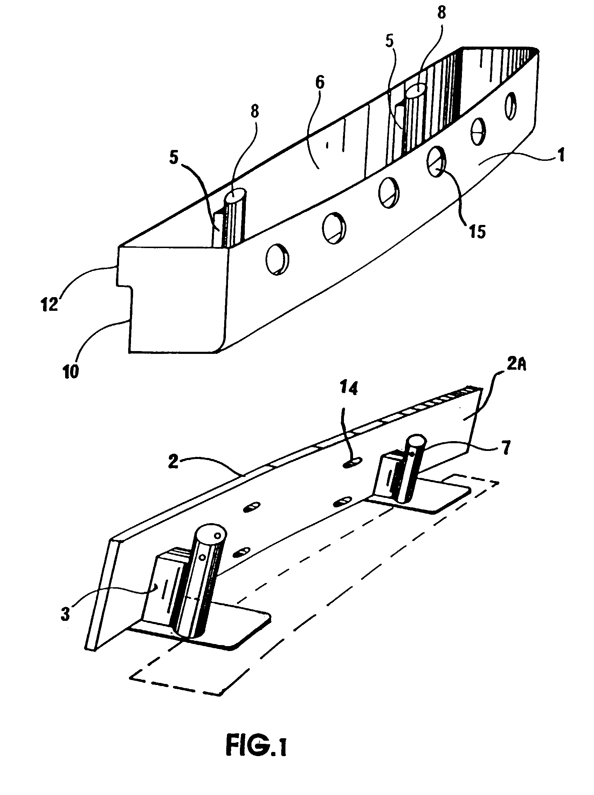

Le dispositif de culture de végétaux, objet de l'invention, est constitué essentiellement d'un bac 1 de culture de végétaux et d'une pièce d'assise 2. Cette pièce d'assise 2 est destinée à être fixée à un support vertical ou horizontal et reçoit, une fois fixée au support, le bac de culture 1. Ce bac de culture 1 est généralement ainsi disposé à hauteur du sol et dans certaines configurations en porte à faux sur la pièce d'assise 2 (voir figure 1).Un tel dispositif s'adresse donc plus particulièrement à des cultures suspendues.

Le bac 1 de culture de végétaux, objet de l'invention, affecte généralement la forme d'un corps parallélépipédique ouvert sur sa face du dessus. La face de fond 4 du bac 1 creux d'allure générale parallélépipédique et son ouverture 6 supérieure sont reliées par des parois latérales, au moins l'une desdites parois comportant des ouvertures 15 pour le passage des végétaux en culture dans le bac. Les différentes faces constituant les parois latérales de ce bac 1 de culture peuvent être planes ou galbées. Ainsi, dans la figure 1, la face frontale de ce bac 1 qui porte les ouvertures 15 servant au passage des végétaux en culture est une face légèrement galbée.

Ce bac 1 est pourvu, dans sa partie de fond 4, d'au moins une cheminée 5, ou organe tubulaire, ouvert à sa base et s'étendant verticalement de ladite partie de fond 4 en direction de l'ouverture 6 du bac 1 afin de constituer un logement 8 pour un organe d'immobilisation et de positionnement complémentaire 7 appartenant à la pièce d'assise 2. Par complémentaire, on entend un organe d'immobilisation 7 dont la forme est compatible avec celle de la cheminée 5 pour permettre l'introduction de l'organe 7 dans la cheminée 5. Dans l'exemple représenté à la figure 1, le bac 1 est pourvu de deux cheminées 5. Ces cheminées 5 affectent généralement une forme tronconique.

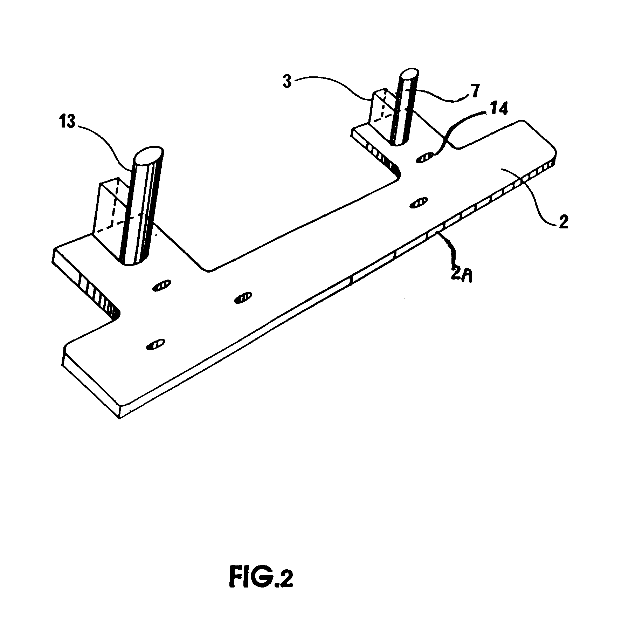

La pièce d'assise 2 peut quant à elle affecter un grand nombre de formes. Deux exemples de réalisation sont fournis aux figures 1 et 2. Dans le cas de la figure 1, la pièce d'assise 2 est constituée d'une platine 2A portant des organes d'immobilisation 7 reliés à ladite platine au moyen d'une butée 3. La fixation de la pièce d'assise 2 et en particulier de la platine 2A à un support vertical s'effectue grâce à des organes de fixation classiques, tels que vis traversant des perçages 14 ménagés dans ladite platine 2A de la pièce d'assise 2. A titre d'exemple, ce support vertical peut être constitué par un garde-corps, un mur ou autre. Les organes d'immobilisation 7, qui affectent dans les exemples représentés la forme de fiches ou d'appendices, sont disposés orthogonaux à l'axe des perçages 14 ménagés dans la platine 2A de la pièce d'assise 2 pour autoriser une pose du bac 1 en applique sur le support vertical quelconque, non représenté.

La pièce d'assise 2, représentée à la figure 2, est constituée également d'une platine 2A qui porte des organes d'immobilisation 7. Cette platine 2A est, de manière identique à ce qui est représenté à la figure 1, pourvue de perçages 14 pour permettre la fixation de la pièce d'assise dudit corps de soutien 2 à un support, ce support horizontal pouvant là encore être constitué d'un mur, d'une surface d'appui quelconque, telle que rebord de fenêtre, etc. Les organes d'immobilisation 7 portés par la platine 2A sont dans ce cas disposés perpendiculaires à l'axe des perçages 14 de ladite platine 2A pour autoriser une pose du bac 1 en appui sur le support horizontal (non représenté).

Il est bien évident que ces deux pièces d'assise, telles que représentées aux figures 1 et 2, pourraient être réunies pour constituer une seule et même pièce d'assise qui permettrait à la fois une pose en applique sur un support vertical ou une pose en appui sur un support horizontal. Une telle pièce d'assise correspondrait par exemple à la pièce d'assise 2 de la figure 1 en y incluant la portion représentée en pointillés. Cette portion en pointillés affecterait la forme d'une platine conforme à celle représentée à la figure 2.

La réunion du bac 1 à la pièce d'assise 2 se fait par simple emboîtement du logement 8 du bac 1 sur l'organe d'immobilisation 7 du corps de soutien 2. C'est l'une des caractéristiques principales de ce bac de culture qui permet un assemblage aisé du bac 1 et de la pièce d'assise 2. En effet, une fois le logement 8 du bac 1 de culture emboîté sur l'organe d'immobilisation 7, par amenée du bac 1 de culture au-dessus de la pièce d'assise 2 puis descente de ce bac 1 de culture, il n'est pas nécessaire de procéder à d'autres opérations pour obtenir un maintien et une immobilisation parfaite du bac 1 sur la pièce d'assise 2 dans une direction orthogonale à l'axe d'introduction du bac 1 sur l'organe 7.

Pour permettre cette réunion du bac 1 à la pièce d'assise 2 par simple emboîtement et avec masquage de la pièce d'assise 2, il est nécessaire, dans le cas d'une pièce d'assise 2, telle que celle représentée à la figure 1, que la ou les cheminées 5 du bac 1 de culture soient pourvues d'une ouverture 9 ménagée sur une portion de la surface périphérique de la cheminée 5. Cette ouverture 9 débouche d'une part dans la face de fond 4 du bac 1, d'autre part dans la face 10 latérale de ce bac 1 qui s'applique à la pièce d'assise 2 lorsque les organes d'immobilisation 7 de la pièce d'assise 2 sont disposés orthogonaux à l'axe des perçages (14) de la pièce d'assise 2, comme c'est le cas dans la figure 1. La largeur de l'ouverture 9 est insuffisante pour autoriser le passage de l'organe d'immobilisation 7 mais suffit au coulissement de la butée 3. Ainsi, dans ce cas, le bac 1 est positionné au-dessus de la pièce d'assise 2 préalablement fixée au support vertical et vient, au cours de sa descente, se positionner automatiquement lors de l'emboîtement des logements 8 du bac 1 sur les organes d'immobilisation 7 de la pièce d'assise 2.

La position extrême d'emboîtement entre cheminée 5 et organe d'immobilisation 7 est obtenue par une butée 3 disposée sur le trajet d'emboîtement entre bac 1 et pièce d'assise 2. Cette butée 3 est ici constituée par la liaison entre l'organe d'immobilisation 7 et la platine 2A de la pièce d'assise 2. Cette butée 3 pourrait également être constituée par la patte supportant l'organe d'immobilisation 7. Dans ce premier cas de figure correspondant à la fixation du bac 1 sur un support vertical, on note que la pièce d'assise 2 est entièrement masquée par le bac 1. Pour parfaire ce masquage, le bac 1 est équipé au voisinage du bord libre de sa face latérale 10, qui s'applique à la pièce d'assise 2, d'un rebord épaulé 12. Ceci permet ainsi de disposer d'un bac 1 en applique sur le support vertical tout en rendant invisible la pièce d'assise 2 et sa fixation au support renforçant ainsi l'inviolabilité de l'ensemble.

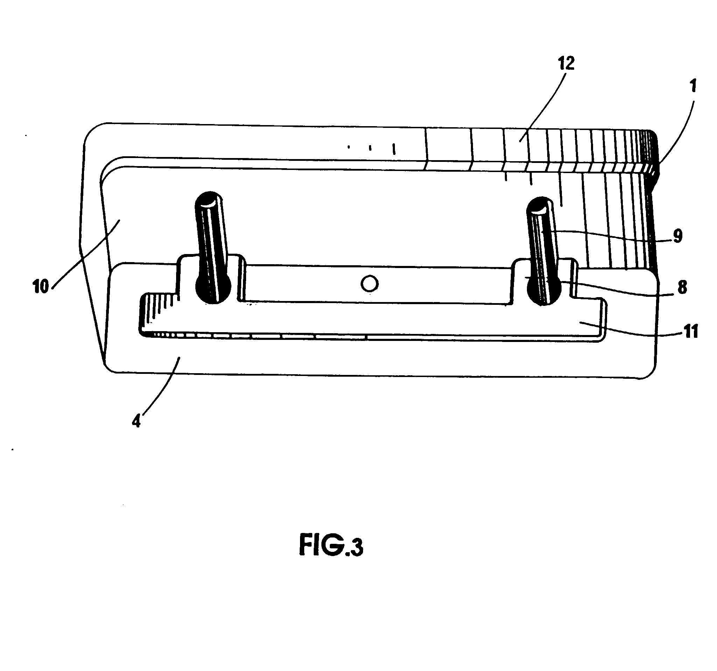

Le bac 1 de culture peut également coopérer avec une pièce d'assise 2 conforme à celle représentée à la figure 2 pour permettre la fixation du bac 1 sur un support horizontal. Dans ce cas, comme le montre la figure 3, la face formant fond 4 du bac 1 comporte sur sa face externe une empreinte 11 pour recevoir à emboîtement masqué tout ou partie de la pièce d'assise 2. Ainsi, dans cette configuration, la pièce d'assise 2 est également rendue invisible. Dans ce cas, la position extrême d'emboîtement entre cheminée 5 et organe d'immobilisation 7 est obtenue à nouveau par une butée 3 disposée sur le trajet d'emboîtement entre bac 1 et pièce d'assise 2. Cette butée 3 peut, dans un exemple de réalisation non représenté, être tout simplement constituée par la platine 2A de la pièce d'assise 2.

La simplicité et la sécurité du montage entre bac 1 de culture et pièce d'assise 2 sont obtenues grâce au fait que la ou les cheminées 5 s'étendent de la face de fond 4 du bac 1 jusqu'au voisinage des bords libres de l'ouverture 6 supérieure du bac 1 pour délimiter une hauteur d'emboîtement entre cheminée 5 et organe d'immobilisation 7 suffisante pour neutraliser un couple de basculement exercé sur le bac 1. En effet, que ce soit à l'état chargé du bac 1 de culture ou lorsqu'une personne exerce une traction sur le bac, il est indispensable que ce bac soit maintenu en position. Ceci est obtenu notamment grâce à la hauteur d'emboîtement choisie entre cheminée 5 et organe d'immobilisation 7 sans organe de fixation supplémentaire.

Grâce à ce montage, il devient également aisé d'assembler de manière verrouillée bac 1 de culture et pièce d'assise 2. Pour ce faire, il est prévu un organe de verrouillage entre cheminée 5 et organe d'immobilisation 7 interdisant leur désaccouplement à l'état emboîté. Cet organe de verrouillage peut par exemple être constitué, dans le cas où l'organe d'immobilisation 7 fait saillie de l'extrémité supérieure de la cheminée 5 en position emboîtée du bac 1 sur la pièce d'assise 2, par une simple goupille ou un axe traversant ledit organe d'immobilisation 7 et empêchant de ce fait le retrait dudit bac 1 de culture. Les perçages permettant la réception de cette goupille dans l'organe d'immobilisation 7 sont notamment représentés en 13 à la figure 2. Bien évidemment, d'autres organes de verrouillages, tels que cadenas ou autres, peuvent être également utilisés.

Un tel dispositif de culture, objet de l'invention, se caractérise donc pas la simplicité de montage du bac sur une pièce d'assise 2 que ce soit pour la fixation de ce bac 1 de culture à un support vertical ou à un support horizontal.

De manière en soi connue, ce bac 1 de culture peut comporter une grille amovible destinée à venir se poser sur la face formant fond 4 du bac 1 de culture, cette grille permettant de constituer une réserve d'eau. De même, la face frontale du bac de culture 1 peut être équipée de hublots 15 permettant de réaliser des architectures florales intéressantes, comme cela a déjà été mentionné ci-dessus. Ces hublots peuvent être obturés au moyen d'une plaque amovible apte à être logée à l'intérieur dudit bac 1 de culture. On autorise ainsi des cultures sur différentes hauteurs du bac 1 de culture.

## Revendications

1. Dispositif de culture de végétaux à destination décorative, du type comprenant au moins un bac (1) de culture à végétaux et une pièce d'assise (2) pour fixer ledit bac (1) sur un support quelconque, généralement vertical ou horizontal, tel que mur, garde corps, surface d'appui,
caractérisé en ce que, d'une part, la pièce d'assise (2) comprend au moins une platine de fixation (2A) comportant au moins un perçage traversant (14) pour le passage d'un organe de fixation de la pièce d'assise (2) au support et au moins un organe d'immobilisation et de positionnement (7) du bac (1) de culture sur la pièce d'assise (2), et en ce que, d'autre part, le bac (1) est pourvu, dans sa partie de fond (4), d'au moins une cheminée (5) ou organe tubulaire, ouvert à sa base, et s'étendant sensiblement orthogonalement de ladite partie de fond (4) en direction de l'ouverture (6) du bac (1) afin de constituer un logement (8) pour l'organe d'immobilisation et de positionnement complémentaire (7) de la pièce d'assise (2), la réunion du bac (1) à la pièce d'assise (2) se faisant par simple emboîtement du logement (8) du bac (1) sur l'organe d'immobilisation (7) de la pièce d'assise (2), ce ou ces organes d'immobilisation (7) de la pièce d'assise (2) étant disposés orthogonaux et/ou parallèles à l'axe du perçage (14) de la pièce d'assise (2) pour autoriser une pose en applique sur un support vertical ou en appui sur un support horizontal.

2. Dispositif de culture selon la revendication 1,
caractérisé en ce que la ou les cheminées (5) du bac (1) de culture sont pourvues d'une ouverture (9) ménagée sur une portion de la surface périphérique de la cheminée (5) de manière à déboucher d'une part dans la face de fond (4) du bac (1), d'autre part dans la face latérale (10) de ce bac (1) qui s'applique à la pièce d'assise (2) lorsque les organes d'immobilisation (7) de la pièce d'assise (2) sont disposés orthogonalement à l'axe des perçages (14) de la pièce d'assise (2), ledit débouché dans la face latérale (10) interdisant par ses dimensions le passage de l'organe d'immobilisation (7) logé dedans.

3. Dispositif de culture selon l'une des revendications 1 et 2,
caractérisé en ce que la face formant fond (4) du bac (1) comporte sur sa face externe une empreinte (11) pour recevoir à emboîtement masqué tout ou partie de la pièce d'assise (2).

4. Dispositif de culture selon l'une des revendications 1 à 3,
caractérisé en ce que la ou les cheminées (5) s'étendent de la face de fond (4) du bac (1) jusqu'au voisinage des bords libres de l'ouverture (6) supérieure du bac (1) pour délimiter une hauteur d'emboîtement entre cheminées (5) et organes d'immobilisation (7) suffisante pour neutraliser un couple de basculement exercé sur le bac (1).

5. Dispositif de culture selon l'une des revendications 1 à 4,
caractérisé en ce qu'il est prévu un organe de verrouillage entre cheminée (5) et organe d'immobilisation (7) interdisant leur désaccouplement à l'état emboîté.

6. Dispositif de culture selon l'une des revendications 1 à 5,
caractérisé en ce que la position extrême d'emboîtement entre cheminée (5) et organe d'immobilisation (7) est obtenue par une butée (3) disposée sur le trajet d'emboîtement entre bac (1) et pièce d'assise (2).

7. Dispositif de culture selon l'une des revendications 1 à 6,
caractérisé en ce que le bac (1) affecte la forme d'un corps creux d'allure générale parallélépipédique dont la face de fond (4) du bac (1) et son ouverture (6) supérieure sont reliées par des parois latérales, au moins l'une desdites parois comportant des ouvertures (15) pour le passage des végétaux en culture dans le bac.
